# EUROPEAN PATENT APPLICATION

(11) **EP 4 391 269 A1**
(43) Date of publication of application: **26.06.2024**
(21) Application number: 23208498.8
(22) Date of filing: 08.11.2023
(51) Int. Cl.: H02J 3/00, G06Q 10/04, G06Q 50/06, H02J 3/38, H02J 3/32, H02J 7/00

(54) **VIRTUAL PEAKER POWER PLANT**

(30) Priority: 22.11.2022 US 202217992065
(71) Applicant: Honeywell International Inc., Charlotte, NC 28202 (US)
(72) Inventor: MANIKFAN, Sameer D., Charlotte, 28202 (US); TRENCHARD, Andrew J., Charlotte, 28202 (US)
(74) Representative: Houghton, Mark Phillip

(57) **Abstract**

A method and system for a virtual peaker power plant (VPPP) that develops scheduler models for grid interactive power flow between an aggregation of multiple microgrids or stand-alone distributed energy resources (DERs), controlled by the VPPP and a main electrical grid. The VPPP provides day ahead forecasts for grid demand and costs of electrical power determined from external sources. Grid peak prediction software executing in the VPPP develops day ahead forecasts and day ahead schedules for power generation demand, energy storage and load dispatch from the data supplied by multiple microgrids connected to the VPPP. The VPPP generates and downloads a scheduler model for each microgrid to a controller controlling the microgrid. The controller uses the scheduler model to develop schedules and demand forecasts for the microgrid.

## Description

### TECHNICAL FIELD

This disclosure is generally directed to virtual power plants. More specifically, it relates to a virtual peaker power plant for supplying power to, or minimizing power withdrawal from, an electrical grid by microgrids during time periods of peak grid power demand.

### BACKGROUND

Centralized base load power plants that generate and supply electrical power to an electrical grid cannot timely respond to rapid changes to the power demand of the grid. Some centralized base load power plants are complemented with gas turbine generators that function as peaker power plants that supplement the power produced by the base load power plant during a period of peak grid power demand. As centralized base load power plants are being replaced by decentralized renewable power generation systems and energy storage assets another form of peaker power plant is required to be used with the distributed power generation and energy storage assets to provide grid peak power demand.

As most of the distributed power generation and storage assets are located behind distributed microgrids of an electrical grid, cloud-based virtual power plants are used to aggregate distributed power generation and energy storage systems of several distributed microgrids with the purpose of enhancing power generation. A virtual peaker power plant can be used with the renewable power generation systems and energy storage assets located at distributed microgrids, as an alternative to the centralized gas turbine. The virtual peaker power plant can distribute power to the microgrids connected to an electrical grid that require increased peak grid power demand using the power generation systems and storage assets of the microgrids and the power generation and energy storage assets deployed by commercial and industrial prosumers.

### SUMMARY

This disclosure relates to a virtual peaker power plant for supplying power to, or minimizing power withdrawal from, an electrical grid by microgrids during time periods of peak grid power demand.

In a first embodiment a method is disclosed for developing a scheduler model by a virtual peaker power plant (VPPP) for use by a plurality of controllers connected to the VPPP. Each controller controls the operation of a microgrid connected to an electrical grid. The method comprises receiving from external sources a day ahead forecast for electrical grid demand and price of electrical power and receiving from each controller connected to the plurality of microgrids state information for each microgrid connected to the electrical grid. The method further includes generating a long term day ahead schedule for battery charge and discharge, controllable power generation and load dispatch using a scheduler neural network model and a short term near real-time schedule using the scheduler neural network model for forecasted power generation from renewable sources, demand, price, and costs for the aggregation of the plurality of the microgrids connected to the electrical grid. A cost optimization calculation is performed using a gradient descent algorithm to develop a schedule for battery charge and discharge, controllable power generation and load dispatch using the forecasted power generation from renewable sources, demand, price, and costs for the aggregation of the plurality of the connected microgrids. Next, the total weighted costs of the schedules developed by the neural network model and the cost optimization calculation are compared. The VPPP maintaining and using the scheduler neural network model to generate a schedule for battery charge and discharge, controllable power generation and load dispatch for each microgrid of the plurality of microgrids when the total weighted costs of the neural network scheduler model is less than the cost optimization calculation.

In a second embodiment system is disclosed for developing a scheduler model by a virtual peaker power plant (VPPP) for use by a plurality of controllers. Each controller controlling a microgrid of a plurality of microgrids connected to an electrical grid, the system comprising, a processor and a communication interface coupled to the processor. The communication interface configured to communicate with external sources to receive a day ahead forecast for electrical grid demand and price of electrical power. The communication interface further coupled to each controller connected to the plurality of microgrids to receive state information for each microgrid connected to the electrical grid. A neural network scheduler is executed by the processor that runs a scheduler neural network model that receives the day ahead forecast and state information and generates a long term day ahead schedule for using the forecasted power generation using renewable sources, demand, price, and costs for the aggregation of the plurality of the microgrids connected to the electrical grid. A mixed integer non-linear programing (MINLP) solver executed by the processor also receives the state information and performs a cost optimization calculation to develop a schedule model for the forecasted power generation using the renewable resources, demand, price, and costs for the aggregation of the plurality of microgrids connected to the electrical grid. A schedule validator coupled to the neural network scheduler and the MINLP, compares the total weighted cost of the schedule model developed by the scheduler neural network model and the cost optimization calculation developed by the MINLP. The VPPP maintaining the scheduler model in a microgrid scheduler associated with each microgrid and used to generate a long term day ahead schedule for battery charge and discharge, controllable power generation and load dispatch for each microgrid of the plurality of microgrids when the total weighted costs of the neural network scheduler model is less than the cost optimization calculation.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIG. 1 illustrates an example virtual peaker power plant controlling a plurality of distributed independent power producers and commercial and industrial prosumers of the present disclosure;
FIG. 2 illustrates an example computing device that may be used to implement the VPPP controller of the present disclosure;
FIG. 3 illustrates a schematic representation of an example virtual peaker power plant controller of the present disclosure;
FIG. 4 illustrates a schematic representation of the scheduler model of the present disclosure;
FIG. 5 illustrates a schematic representation of an example intelligent edge controller of the present disclosure;
FIG. 6 illustrates a schematic representation of an example microgrid demand forecaster model of the present disclosure;
FIG. 7 illustrates a schematic representation of an example microgrid renewable generation forecaster model of the present disclosure;
FIGS 8A and 8B illustrate the operational process steps used by the virtual power plant centralized controller of FIG. 3 to develop the scheduler models of the present disclosure; and
FIGS 9A and 9B illustrate the operational process steps used by the intelligent edge controller of FIG. 5 to develop schedules for a microgrid of the present disclosure.

### DETAILED DESCRIPTION

The figures, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

Embodiments of the present disclosure depicts a virtual power plant that addresses the needs of meeting grid peak power demand using energy storage and renewable power generation assets located at distributed microgrids, as an alternative to a centralized gas turbine peaker power plant. The virtual peaker power plant of the present disclosure provides a virtual power plant for providing peaker demands for electrical energy using the renewable power generation and energy storage assets co-located with the loads of a microgrid and the renewable power generation and energy storage assets deployed by commercial and industrial prosumers.

The virtual peaker power plant (VPPP) is required to react to dynamic predictions on grid peak power demand and also to the dynamic nature of renewable power generation resources at a microgrid to preserve the privacy of microgrid internal operations. Such as for example, the scheduling of internal loads, commitment of power generators or renewable generation units, generation control and energy storage control. When grid peaks are predicted a day ahead, several factors such as accuracy of weather forecast, and consumer responses can affect the accuracy of the long-term forecasts and grid peak prediction. The VPPP of the present disclosure includes embodiments for short term forecasting to overcome uncertainties associated with a long-term forecasts and real-time responses from the demands of multiple microgrids and distributed energy resources (DERs).

The VPPP of the present disclosure consists of a grid peak prediction software and schedulers that provide a schedule for grid interactive power flow (i.e., import or export of power) between an aggregation of microgrids or stand-alone DERs, that are controlled by the VPPP and a main electrical grid. The VPPP further provides day ahead forecasts for grid demand and costs of electrical power determined from external systems, such as for example, independent system operators (ISO), utility SCADA, energy trading platforms and carbon trading platforms. The grid peak prediction software generates a forecast for grid demand with a prediction on whether a peak is one of the top peaks of the year. The grid peak prediction software also predicts any real-time changes to grid peaks based on weather forecasts and is updated over time or due to consumer response to the predicted grid peaks. The likelihood of a peak shifting in time is greater if the peak is a top peak, when compared to smaller peaks. The VPPP further receives day ahead scheduling for power generation demand, energy storage and load dispatch from multiple microgrids that are connected to the VPPP. The VPPP uses the inputs to generate an aggregate of the demand from the microgrids and connected to the VPPP.

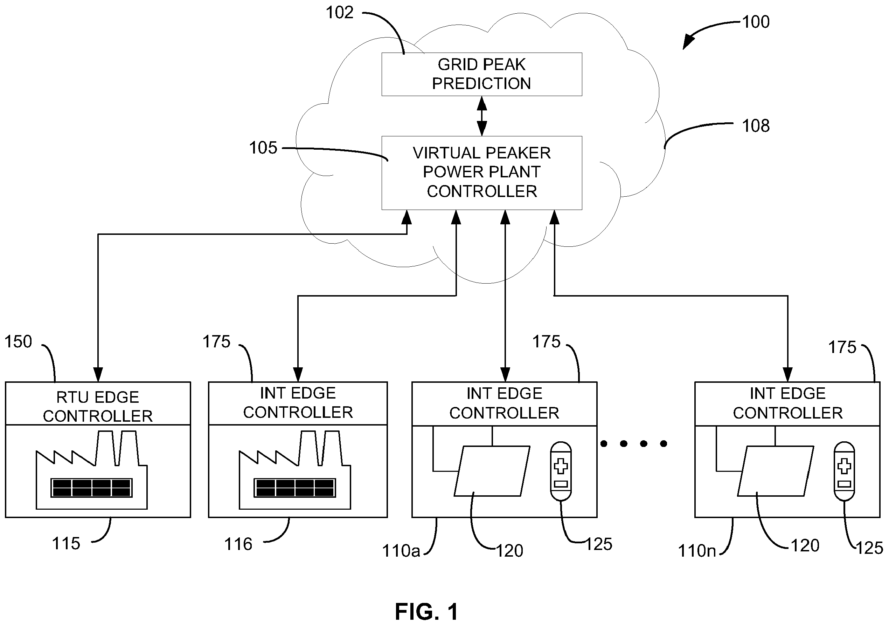

FIG. 1 illustrates the VPPP of the present disclosure. The VPPP 100 consists of grid peak prediction software, executing in a VPPP controller 105 hosted in a cloud platform 108. The VPPP controller 105 is coupled to a plurality of distributed energy systems. Such as behind the meter commercial and industrial (C&I) prosumers 115, 116 or front of the meter independent power producers (IPP) 110a-110n. The microgrids owned by the IPPs 110a-110n have renewable generation and energy storage systems, such as for example solar energy collectors 120 and battery storage systems 125. IPPs 110a-110n own power generation assets and energy storage assets that may be located at a microgrid or at stand-alone distributed energy resource (DER) sites. The IPPs 110a-110n supplement power to a microgrid from the electrical grid. The C&I prosumers usually consume more energy than they produce over a long duration of time (typically one day). However, they may produce more power than what they consume over short durations of time that may span from a few minutes to hours. Energy storage helps them to consume what they produce over such short durations of time when power generation falls below the power demand.

IPPs 110a-110n supply power to the grid and may have either a power purchase agreement or contract with a power utility supplying electrical energy to the grid for a fixed or variable amount of electrical energy over a long duration of time. However, over a shorter duration of time, there could be a shortfall in the generation of power from any renewable energy sources used by the IPP due to cloud cover affecting solar energy systems or low wind affecting wind generating systems that requires coupling stored energy from a battery to meet the power purchase agreements. An IPP may also trade energy with an energy trading company, or an energy exchange or energy market operator. Typically, power produced in excess of power purchase agreement over short durations of time would be stored in an energy storage system, such as rechargeable batteries of battery storage system 125 that can be transmitted when the prices of power supplied is high.

The VPPP controller 105 is connected to edge controllers located at individual IPP sites 110a-1 10n or C&I sites 115, 116. Edge controllers are typically devices that have built-in processors that can execute control programs and may include data sensors for collection of data. The edge controllers may also include I/O capabilities for receiving and transmitting data and control commands to and from the edge controller. The edge controllers may be either a conventional remote terminal unit RTU edge controller, such as RTU edge controller 150 or an intelligent edge controllers 175. The intelligent edge controller 175 includes onboard artificial intelligence or neural networks providing enhanced analytics. The RTU edge controller 150 is arranged to upload real-time data on instantaneous power generation from the renewable energy sources, demand and battery state of charge and the state of health of the battery storage system 125 to the VPPP controller 105. The VPPP controller 105 uses the information provided by the RTU edge controller 150 to develop a schedule for grid interactive power flow (i.e., import or export of power) between an aggregation of microgrids or stand-alone DERs, that are controlled by the VPPP controller 105 and a main electrical grid. The schedule is downloaded to and executed by the RTU edge controller 150 as a schedule for grid interactive power flow (i.e., import or export of power) between an aggregation of microgrids or stand-alone DERs, for the microgrids coupled to the RTU edge controller 150, in the example illustrated in FIG. 1 to C&I 115.

Certain microgrids connected to an IPP 110a-110n or C&I prosumers 115, 116 may have intermittent and variable renewable generation sources, or controllable or dispatchable power generation from non-renewable fossil fuel generators such as for example hydrogen fuel cell generators and/or diesel or gas turbine generators and variable controllable loads. In such microgrids, the IPPs 110a-110n or C&I prosumers 116 may use an intelligent edge controller such as intelligent edge controller 175. The intelligent edge controller 175 may be used to execute or alternatively locally develop schedules for the control of energy generation from renewable energy sources, the loads and energy storage capacity for a grid connected microgrid and to minimize the use of controllable power generation from diesel and gas turbine generators that have high costs of power. The intelligent edge controller 175 uses a scheduler model, as opposed to a schedule, run by the RTU edge controller 150. The scheduler model is trained in the VPPP 105 and downloaded from the VPPP controller 105 to the intelligent edge controller 175. The scheduler model is executed by a containerized application hosted in each intelligent edge controller 175. It should be noted that the above explanation of the VPPP 100 was made associating an RTU edge controller 150 with a C&I prosumer and an intelligent edge controller 175 with an IPP. It will be understood by those skilled in the art that based on demands of a microgrid an IPP may also be controlled by an RTU edge controller 150, while a C&I prosumer, such as for example C&I prosumer 116, may be controlled by an intelligent edge controller 175.

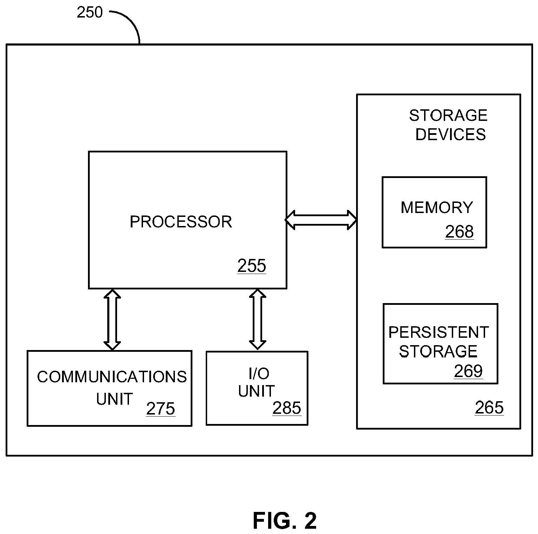

FIG. 2 illustrates an example computing device 250 that may be used to implement the VPPP controller 105 of the present disclosure. As shown in FIG. 2, the computing device 250 includes at least one processor 255, at least one storage device 265, at least one communications unit 275, and at least one I/O unit 285. Each processor 255 can execute instructions, such as those that may be loaded into a memory 268. Each processor 202 denotes any suitable processing device, such as one or more microprocessors, microcontrollers, digital signal processors, application specific integrated circuits (ASICs), field programmable gate arrays (FPGAs), or discrete circuitry.

The memory 268 and a persistent storage 269 are examples of storage devices 265, which represent any structure(s) capable of storing and facilitating retrieval of information (such as data, program code, and/or other suitable information on a temporary or permanent basis). The memory 268 may represent a random access memory or any other suitable volatile or non-volatile storage device(s). The persistent storage 269 may contain one or more components or devices supporting longer-term storage of data, such as a read only memory, hard drive, flash memory, or optical disc.

The communications unit 275 supports communications with other systems or devices. For example, the communications unit 275 could include at least one network interface card or wireless transceiver facilitating communications over at least one wired or wireless network. As a particular example, the communications unit 275 could support communications with one or more intelligent edge controllers 175 or RTU controllers edge controllers 150. The communications unit 275 may support communications through any suitable physical or wireless communication link(s).

The I/O unit 285 allows for input and output of data. For example, the I/O unit 285 may provide a connection for user input through a keyboard, mouse, keypad, touchscreen, or other suitable input device. The I/O unit 285 may also send output to a display, printer, or other suitable output device. Note, however, that the use of the I/O unit 285 for local I/O may not be needed, such as when the device 200 is accessible locally or remotely over a network connection.

As will be described in more detail below, the processor 255 of the computing device 250 can be used to execute the components and functions of the VPPP controller 105. The processor 255 of the computing device 250 can also be used to execute communication protocols used in the transfer of data to and from computing device 250.

Although FIG. 2 illustrates one example of a computing device 200 for implementing the VPPP controller 105, various changes may be made to FIG. 2. For example, various components in FIG. 2 could be combined, further subdivided, or omitted and additional components could be added according to particular needs. Also, computing devices can come in a wide variety of configurations, and FIG. 2 does not limit this disclosure to any particular configuration of device.

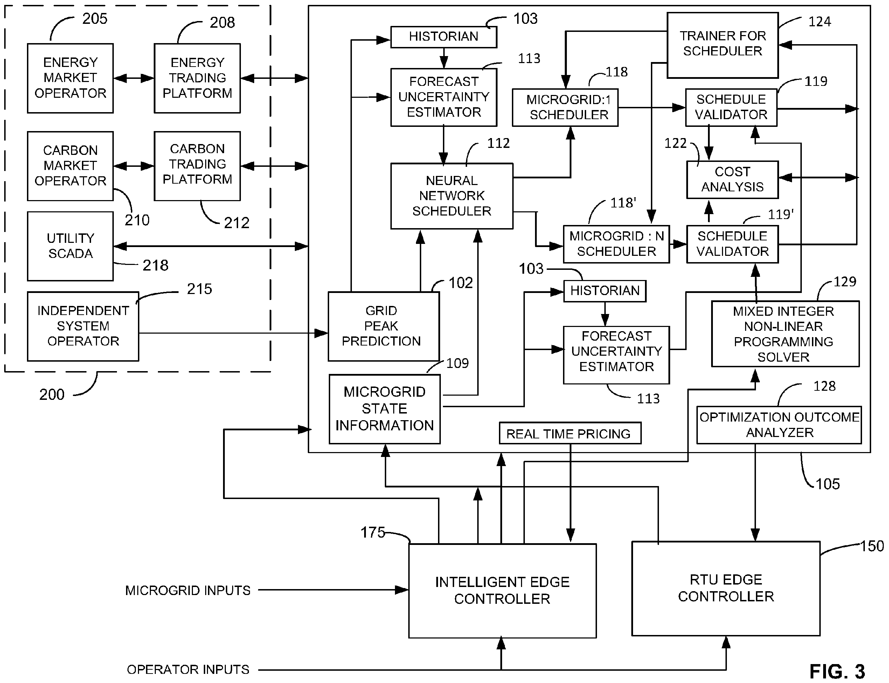

FIG. 3 illustrates the functional elements of VPPP controller 105 of the present disclosure. The VPPP controller 105 receives information from external information resources 200 that provide real-time or current pricing of electrical power and capacity for the local electrical grid. For example, an energy market operator 205 receives information on energy bid and clearing prices for the local electrical grid from an energy trading platform 208 and providing the real-time selling price, the real-time buying price, and selling price and buying price forecast for power supplied by the grid. A carbon market operator 210 may receive carbon bid prices and clearing prices that provide carbon price demands of the electrical grid from a carbon trading platform 212. An independent system operator 215 may be connected to the grid peak predictor that provides a grid power demand forecast, an hourly cost of electricity, critical electrical peak pricing, clearing process and any adjustment charges that affect the cost and demand of grid electrical power. A supervisory control and data acquisition system (SCADA) 218 may also be connected to VPPP controller 105 for monitoring and collecting data for use by the utility or operator of the electrical grid.

Microgrid state information for each of the microgrids connected to the IPP 110a-110n and C&I prosumers 115, 116 are transmitted to the VPPP controller 105 from an associated intelligent edge controller 175 and RTU edge controller 150. The microgrid state information includes for each microgrid connected to the VPPP 105, the actual load dispatch, the actual power generation capability the microgrid, the state of charge (SOC), for both charge and discharge of any battery storage system, the capacity of the battery and a weather forecast for the location of the microgrid. The state information 109 is used with the grid information provided by the external information resources 200 to train scheduler and forecaster models using stored historical data from historians 103.

As illustrated in Fig. 3, grid information from the external information resources 200 suppled to the grid peak prediction software 102 is coupled to a neural network scheduler 112, along with historical data from historian 103 and data from a forecast uncertainty estimator 113 and used for forecasting values as compared with actual observations for the neural network scheduler, providing output signals of aggregate grid power demand, power supply and energy storage to microgrid schedulers 1 through n 118, 118'. Each microgrid scheduler 118, 118' and its associated validator 119, 119' develop the scheduler model for use in a microgrid by an associated intelligent edge controller 175. It should be noted that the VPPP controller 105 may have one or more schedulers 118 developing models for more than one intelligent edge controller 175 associated with a microgrid. The microgrid scheduler 118, 118' are connected to a validator 119, 119' and a cost analysis module 122 and to a scheduler trainer 124 and back to the microgrid scheduler 118, 118'.

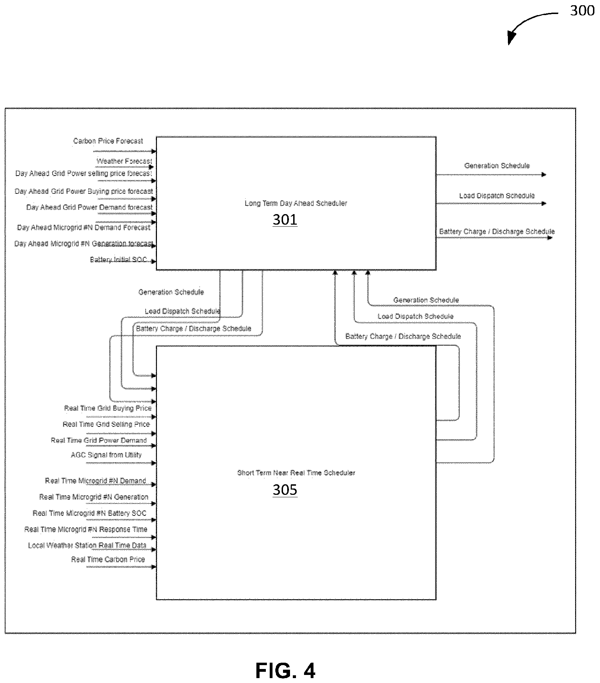

FIG. 4 illustrates a microgrid scheduler model 300 developed by the VPPP 105 of FIG. 2. The scheduler model 300 includes a long-term day ahead aggregate schedule for the microgrids connected to the VPPP controller 105. The aggregate scheduler model 300 is generated using the neural network scheduler 112 using a neural network model. In one implementation the neural network model uses an echo state neural network that produces a time series forecast using a trained neural network, but the approach is not limited to the echo state formulation. The neural network scheduler 112 produces a long-term scheduler 301 that is fine-tuned using a more accurate short-term near real-time scheduler 305, using data input from a microgrid from its associated edge controller. A total weighted cost is calculated using the scheduler neural network model for the aggregation of microgrid and a mixed integer non-linear programming solver (MINLP) 129 located outside the neural network scheduler 112 is run using constraints input from both the grid and microgrids to generate a schedule for power exchange.

The aggregation schedules developed by the neural network scheduler 112 are used to generate schedulers for individual microgrids by microgrid schedulers 118, 118' as explained above. The trained scheduler models are downloaded to a respective intelligent edge controller 175. Each intelligent edge controller 175 uses its developed scheduler model to quickly generate their own schedules using real-time inputs that are immediately available to the controller 175 at the microgrid site. The VPPP controller 105 can also produce a schedule from the scheduler model that is pushed from an optimization outcome analyzer 128 and connected to an RTU edge controller 150 as a schedule for grid interactive power flow (i.e. import or export of power) between an aggregation of microgrids or stand-alone DERs, that are controlled by the VPPP and the main electrical grid.

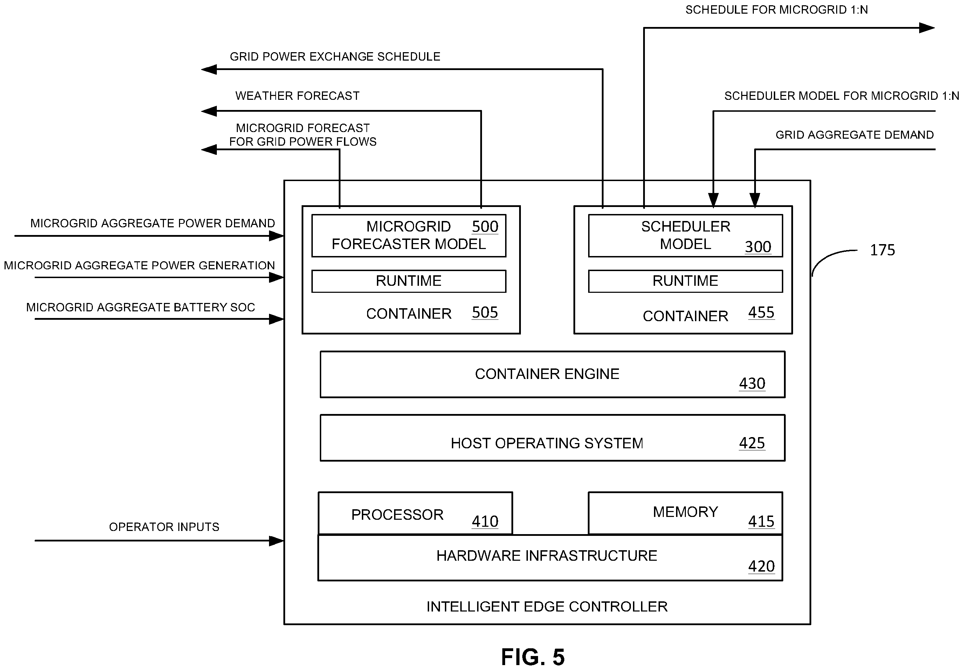

FIG. 5 illustrates the intelligent edge 175 of the present disclosure. Intelligent edge controller 175 comprises a computer processor 410, a memory 415 and a hardware infrastructure 420. The hardware infrastructure providing I/O and network circuitry for communicatively connecting the controller 175 to the VPPP controller 105 and the power generation, operator inputs and battery storage systems of its associated IPP 110a-110n. The processor 410 executes host operating system software 425 used in running controller 175. The memory 415 can be any manner of known memory devices for storing data, the host operating system and other application software that provides specialized functions, such as for example application level virtualization allowing a container engine 430 to execute the microgrid forecaster model 500 and scheduler model 300 as a runtime application in separate computing containers 555, 455, respectively. It should be noted that once a trained scheduler model is downloaded to controller 175 the model can be run directly by the controller. Schedules generated by the schedular model at an intelligent edge controller 175 for use at the connected microgrid by the intelligent edge controller 175 is uploaded to the VPPP controller 105 for review and update with current grid cost data to retrain the VPPP controller 105 scheduler trainer.

Each intelligent edge controller 175 connected to a microgrid generates a forecast for local demand and local power generation for its associated microgrid based on inputs from the microgrid and applied to intelligent edge controller 175. The inputs include for example, the instantaneous aggregate power demand, aggregate power generation sources, aggregate battery state of charge (SOC) from the battery storage systems connected to the microgrid, generators and energy storage assets and site weather station data at the microgrid site served by controller 175. The intelligent edge controller 175 uses the microgrid inputs to generate a demand forecast for the local power demand for the microgrid and served by its associated IPP. The forecaster model 500 runs as a containerized application in a container 555 run time of intelligent edge controller 175.

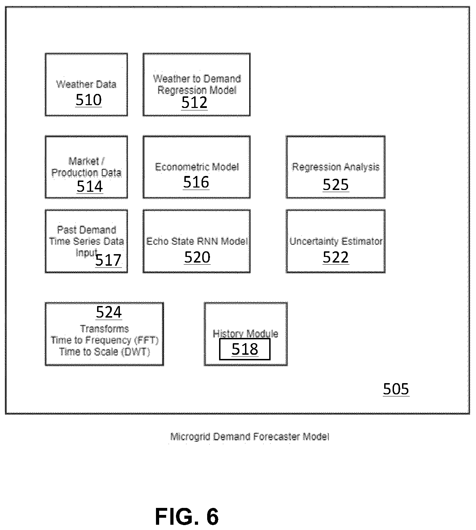

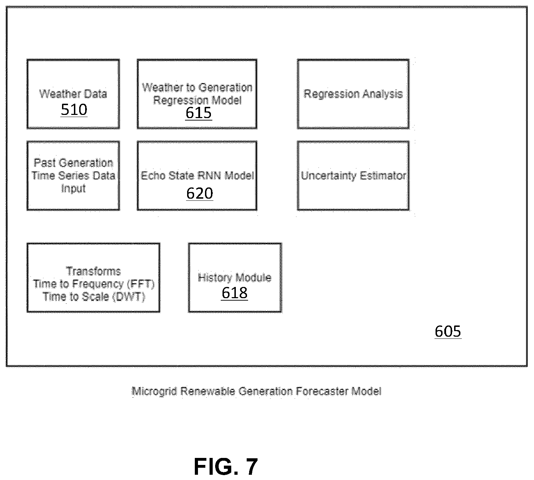

The microgrid forecaster model 500 is comprised of a microgrid demand forecaster model 505 illustrated in FIG. 6 and a renewable generation forecaster model 605 illustrated by FIG. 7. Local microgrid weather data 510 is input to the controller 175 along with weather data from the VPPP 105 provided by regional sources, such as for example, satellite based weather systems. A weather to demand regression model 512 is used to generate a forecast for demand based on the weather data. The microgrid demand forecaster 505 uses market/production data 514 and an econometric model 516 to generate an electricity demand forecast. The microgrid demand forecaster 505 uses a recurrent neural network, such as for example, an echo state network 520 to generate a forecast for future demand based on patterns learned from past demand time series data provided by module 517. However, it should be noted that the approach is not limited to the echo state formulation only. An uncertainty estimator 522 uses the historical data and information on past forecasts to arrive at an estimate for the uncertainty associated with the current forecasts. The historical demand data is also transformed to frequency and scale domain using Fast Fourier Transform (FFT) and Discrete Wavelet transform (DWT) transforms 524. Variance in time domain or the lack of it can affect both the training of a neural network and also its effectiveness to perform prediction after the neural network is trained with a data set that does not have sufficient variance. Transforming the time domain inputs to frequency domain and processing inputs in the frequency domain is an effective solution to this fundamental problem. A time domain signal with no variance will have a peak at zero frequency in the frequency domain and zero values at all other frequencies. Neural networks tend to have high convergence time when the inputs have wideband noise. The presence of wideband noise can cause neural networks to train for a long period of time and not converge if the noise amplitude is high relative to sensor or input signals (low signal to noise ratio). Applying FFT to transform the time domain input signal to frequency domain has a filtering effect for wideband noise. The outputs of the weather demand regression model 512, the econometric model 516 and echo state RNN model 520 are input to a regression analysis model 525 to generate the final forecast for electrical peak demand within the microgrid.

The microgrid renewable generation forecast model 605 receives local weather data as well as local weather data collected from a satellite-based weather data system provided by the VPPP 105 as explained above for the microgrid demand forecaster model 500. A forecast for renewable energy generation based on the weather is developed using a weather to generation regression model 615 from the collected weather data 510. Use of skycams at microgrids sites will typically improve the real-time forecasts for solar generation at the microgrid site. The generation forecaster model 605 also uses historical generation data stored in a historian 618 that is transformed to frequency and scale domains and input to a recurrent neural network, such as the echo state network model 620 to generate a time series forecast for generation similar to the microgrid demand forecaster model 500 explained above. Outputs of the weather to generation regression model 615 and the historical recurrent neural network echo state network model 620 input to a regression analyses model 525 to generate a forecast schedule for the generation of the renewable energy sources within the microgrid to meet peak demands and minimize the use of controllable or dispatchable power generation from diesel and gas turbine generators that have high costs to operate.

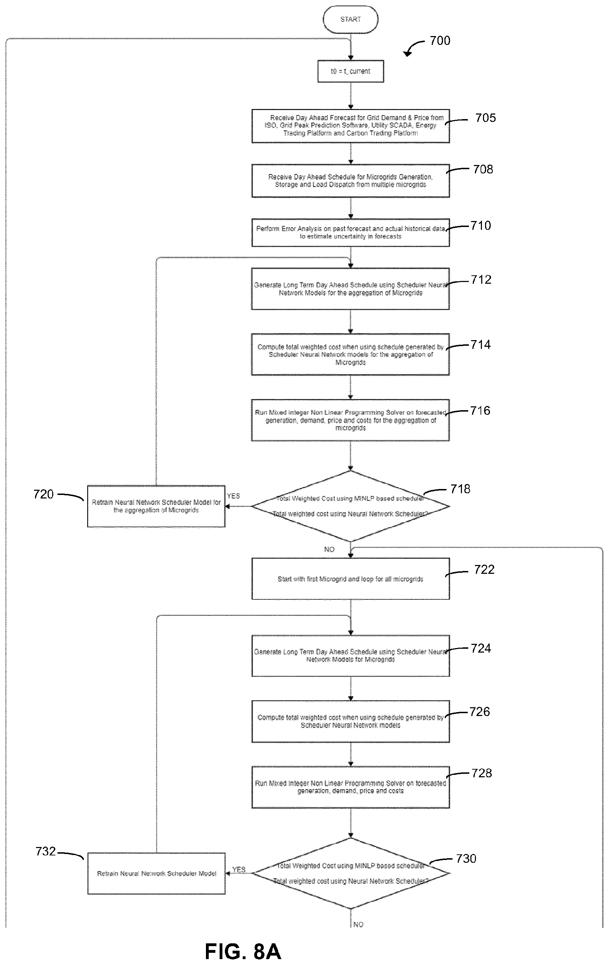

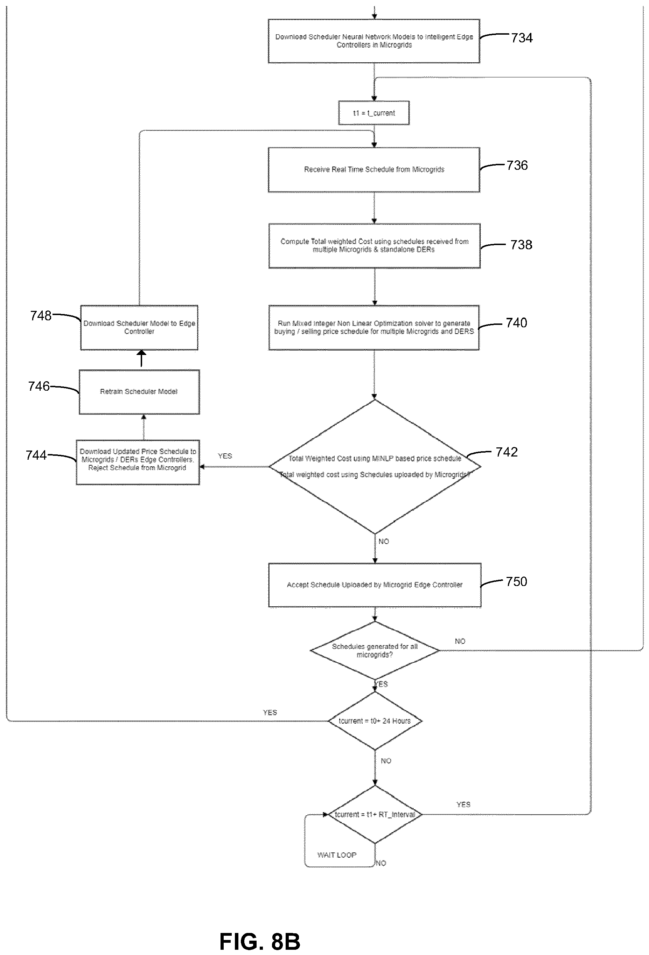

FIGS 8A and 8B schematically illustrate an example process for producing a scheduler model 700 by the VPPP controller 105. In step 705 VPPP controller 105 receives day ahead forecasts for grid demand, electrical power prices from the external information resources 200. A day ahead schedule for microgrid generation storage and load dispatch is received in step 708 by the VPPP controller 105 from multiple microgrids as microgrid state information 109. The state information including for each microgrid connected to the VPPP controller 105, the actual load dispatch, the actual power generation capability the microgrid, the state of charge (SOC) for both charge and discharge of any battery storage system, the capacity of the battery and a weather forecast for the location of the microgrid. In step 710 an error analysis on past forecasts and actual historical data is made that estimates uncertainty in the forecasts using historian 103 and the uncertainty estimator 113. Next in step 712 a long term day ahead schedule is generated using the neural network scheduler models by the neural network scheduler 112 for the aggregation of multiple microgrids. A total weighted cost is calculated in step 714 using the schedule generated by the neural network scheduler models for the aggregated multiple microgrids. A mixed integer non-linear programing (MINLP) solver 129 outside the neural network scheduler 112 is run on the forecasted generation, demand and price and costs for the aggregation of the multiple microgrids in step 716

The MINLP solver performs optimization based on a gradient descent algorithm to minimize the total cost, taking forecasted generation, forecasted demand, battery state of charge and capacity as inputs. The schedule generated by MINLP solver, and the total cost is taken as an input by schedule validator to validate the schedule generated by recurrent neural network model. The recurrent neural net model generates a schedule faster than MINLP solver, and therefore is useful in generating short term schedules and updates, whereas the MINLP solver, even though slower is useful in validating the performance of the data driven neural network model, enabling retraining the recurrent network model when the performance goes low. Since the MINLP solver is more computationally intensive than the neural network scheduler it will take longer to produce a schedule. If the cost of the schedule generated by the MINLP solver for cost optimization has a lower total weighted cost than the total weighted cost of the schedule generated by neural network scheduler, then the neural network scheduler needs to be trained with the new data that is available.

In step 718, if the MINLP solver calculates a total weighted cost for the schedule that is less than the total weighted cost, using the neural network scheduler, then the developed neural network scheduler model for the aggregation of the multiple microgrids is retrained is step 720. If the MINLP however, calculates a greater than total of weighted cost then the operation continues to step 722 that calculates weighted costs for individual microgrids of the multiple microgrids progressing through steps 724, 726, 728. If the MINLP calculates a total weighted cost for an individual microgrid scheduler that is less than the total weighted cost in step 728 using the neural network scheduler to within a configurable tolerance, then the developed schedular neural network model for the individual microgrid is sent back to be retrained is step 732 and the operation is repeated for all of the multiple microgrids until the total weighted cost using the MINLP based scheduler is greater than the total weighted cost calculated by the schedular neural network model. The neural network scheduler will continue to be used as long as it produces schedules that have a low weighted cost of energy. The neural network scheduler is retrained when it is found in step 718 that the schedules it is producing are not producing sufficient energy cost savings. The neural network scheduler will not need to be retrained as long as it can generate a schedule that has a lesser total weighted cost of energy than the schedule generated using MINLP solver. The scheduler model is then downloaded to its respective intelligent edge controller 175 at a microgrid, for example IPP 110a-110n or C&I prosumers 116.

Each intelligent edge controller 175 connected to the VPPP 105 sends their calculated short-term real-time schedules back to the VPPP 105 in step 736 where again the total weighted cost of using the real-time schedules is computed in step 738 and using the MINLP solver to generate a buying/selling price schedule for multiple microgrids in step 740. Total weighted costs are again compared in step 742 using the short term schedules uploaded by the microgrids in step 736. If the MINLP based price is less than the total weighted cost of the uploaded schedule from the microgrid then the uploaded schedule is rejected in step 744 and the scheduler neural net model is retrained in step 746 and the new scheduler model is downloaded to the intelligent edge controller 175 controlling the microgrid in step 748. If the total weighted cost using the uploaded schedule is less than the MINLP based price schedule, then the uploaded schedule is accepted at step 750. It should be noted that the schedule will be accepted only if the cost is not significantly larger than the total weighted cost of a schedule computed by an MINLP solver for cost optimization. Process 700 continues until all the short real-time schedules are received from all of the controllers 175 connected to the VPPP 105.

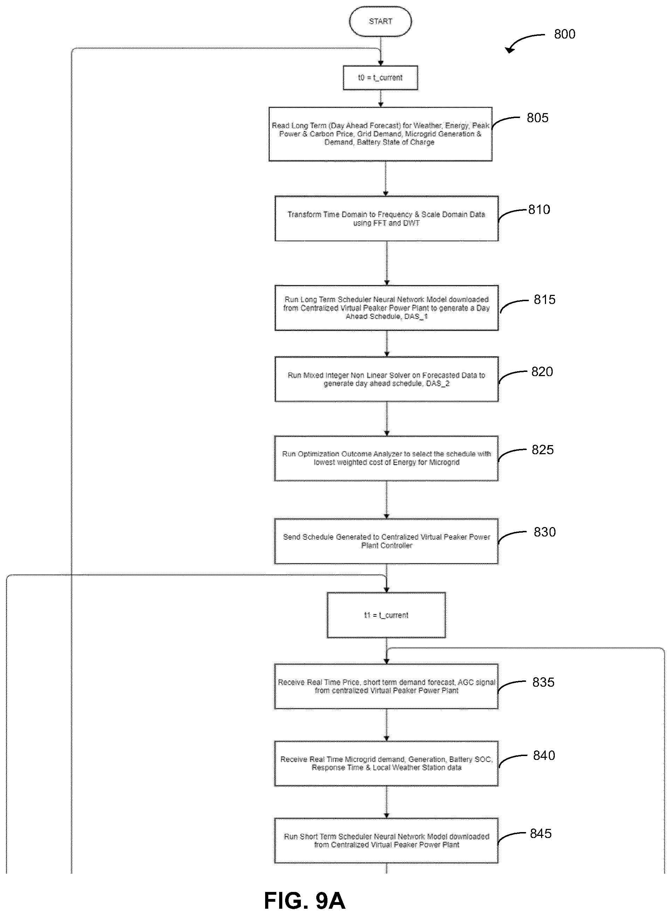

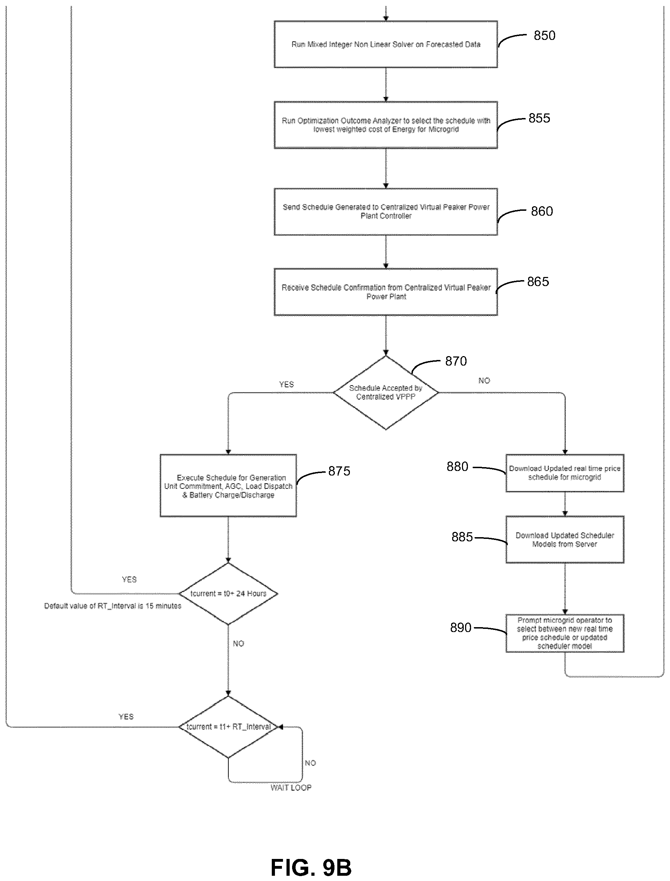

FIGS 9A and 9B schematically illustrate the process of operation 800 of the scheduler model 300 executing in the container 455 of an intelligent edge controller 175 for producing a schedule for grid interactive power flow (i.e., import or export of power) between an aggregation of microgrids or stand-alone DERs, that are controlled by the VPPP controller 105 and all microgrids and stand-alone DERs interconnected with a main electrical grid. In step 805 the intelligent edge controller 175 receives long term day ahead forecasts for weather, energy, peak power and carbon, grid demand from the VPPP controller 105 and microgrid generation, demand and battery state of charge from renewable power generation systems, power meters connected to loads and battery energy storage systems respectively that are located at microgrids owned by the IPP or C&I prosumers servicing the microgrid connected to an intelligent edge controller 175. The forecast data is next transformed in step 810 to frequency and scale domain using Fast Fourier Transform (FFT) and Discrete Wavelet Transform (DWT) transforms. The transformed forecast data from step 810 is then applied to a long term day ahead scheduler 301 model downloaded from the VPPP 105 to generate a day ahead schedule (DAS_1) at step 815. A second day ahead schedule (DAS_2) is developed in step 820 using an MINLP solver. An optimization outcome analyzer is next used in step 825 to select either the DAS_1 or DAS_2 schedule with the lowest weighted cost of energy for the microgrid. The selected schedule is then sent back to the VPPP 105 where it is received at step 722 of the VPPP controller 105 process 700. Process 800 next calculates the short term schedule using the short-term near real-time scheduler. The short-term near real-time scheduler receives real-time price, short term demand forecast and AGC signals from the VPPP controller 105 at step 835. At step 840 the short term scheduler receives real-time microgrid demand, generation, and battery SOC, response time of power generation systems, battery storage systems and loads, and local weather station data.

The received short term data is next run by the short term scheduler model 305 in step 845. The forecast data is run through an MINLP solver in step 850, and a schedule is selected by an optimization outcome analyzer in step 855 based on the lowest weighted cost of energy for the microgrid. The lowest weighted short term schedule is next uploaded to step 736 of the VPPP controller 105 process 700. The VPPP controller 105 uses the short term near real-time schedules developed by the intelligent edge controller 175 to generate to generate a schedule for grid interactive power flow (i.e., import or export of power) between an aggregation of microgrids or stand-alone DERs, that are controlled by the VPPP controller 105 and a main electrical grid for the microgrids. A message is returned to the controller 175 of either its acceptance or rejection of the short term near real-time schedule at step 865. If the short term schedule is accepted by the VPPP controller 105 then the accepted schedule for the microgrid is executed at step 875 for generation unit commitment, AGC, load dispatch and battery charge/discharge for the microgrid associated with an IPP 110a-110n or C&I prosumers 115, 116.

If the short term near real-time schedule is rejected by the VPPP controller 105 the real-time price schedule for the microgrid, at step 880 is updated and updated scheduler models from the VPPP controller 105 are downloaded to the intelligent edge controller 175. An operator is next prompted to select between a new real-time price schedule or an updated scheduler model at step 890 and the selection is applied to back to step 835 for processing of a new short term near real-time schedule by process 800.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," or "controller" within a claim is understood and intended to refer to structures known to those skilled in the relevant art, as further modified or enhanced by the features of the claims themselves and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method for developing a scheduler model by a virtual peaker power plant (VPPP) (100) for use by a plurality of controllers (150, 175) connected to the VPPP, the controller controlling a plurality of microgrids connected to an electrical grid, the method comprising;
receiving (705) from external sources (200) a day ahead forecast for electrical grid demand and price of electrical power;
receiving (708) from each controller (150, 175) connected to the plurality of microgrids state information for each microgrid connected to the electrical grid;
generating a long term day ahead schedule (712) for battery charge and discharge, controllable power generation and load dispatch using a schedular neural network model and a short-term near real-time schedule using the scheduler neural network model for forecasted power generation from renewable sources, demand, price, and costs for the aggregation of the plurality of the microgrids connected to the electrical grid;
performing a cost optimization calculation (714) using a gradient descent algorithm to develop a schedule for the forecasted power generation using renewable sources, demand, price, and costs for the aggregation of the plurality of microgrids connected to the electrical grid;
comparing the total weighted cost of the schedule developed by the scheduler neural network model (712) and the cost optimization calculation (718); and
maintaining and using by the VPPP the scheduler neural network model to generate a schedule for battery charge and discharge, controllable power generation and load dispatch for each microgrid of the plurality of microgrids when the total weighted costs of the neural network scheduler model (712) is less than the cost optimization calculation (718).

2. The method of claim 1, wherein the method further comprises;
performing error analysis (710) on the day ahead forecast before generating the long term day ahead schedule using past forecasts and historical data from a historian (103); and
estimating uncertainty in the day ahead forecasts using the historical data.

3. The method of claim 2, wherein the method retrains (720) the scheduler neural network model for the aggregation on microgrids when the total weighted costs of the scheduler neural network model (712) is greater than the cost optimization calculation (718).

4. The method of claim 3, wherein generating the long term day ahead schedule for each microgrid of the plurality of microgrids comprises:
Generating a long term day ahead schedule (724) using the scheduler neural network model for a microgrid of the plurality of microgrids;
computing a total weighted cost (726) using the schedule generated by the scheduler neural network model;
running a mixed integer non-linear programing (MINLP) solver (728) on forecasted generation, demand, price, and costs to calculate a total weighted cost; and
comparing (730) the total weighted cost of the schedule developed by the scheduler neural network model to the total weighted cost calculated by the MINLP solver (728); and
retraining the scheduler neural net model for the microgrid when the total weighted costs of the MINLP solver (728) is less than the total weighted cost of the scheduler neural network model (726).

5. The method of claim 4, wherein the method further comprises:
downloading the scheduler model (734) developed by the VPPP to the controller (175) controlling a microgrid when the total weighted costs of the MINLP solver is greater than the total weighted cost of the scheduler neural network model.

6. A system for developing a scheduler model by a virtual peaker power plant (VPPP) (100) for use by a plurality of controllers (150, 175), each controller controlling a microgrid of a plurality of microgrids connected to an electrical grid comprising;
a processor (255);
a communication interface (275) coupled to the processor (255), the communication interface configured to communicate with external sources (200) to receive a day ahead forecast for electrical grid demand and price of electrical power, the communication interface (275) further coupled to each controller connected to the plurality of microgrids to receive state information (109) for each microgrid connected to the electrical grid;
a neural network scheduler (112) executed by the processor (255) that runs a scheduler neural network model that receives the day ahead forecast and state information (109) to generate a long term day ahead schedule for using the forecasted power generation using renewable sources, demand, price, and costs for the aggregation of the plurality of the microgrids connected to the electrical grid;
a mixed integer non-linear programing (MINLP) solver (129) executed by the processor that receives the state information (109) and performs a cost optimization calculation to develop a schedule for using the forecasted power generation using renewable sources, demand, price, and costs for the aggregation of the plurality of microgrids connected to the electrical grid;
a schedule validator (119, 119') coupled to the neural network scheduler (112) and the MINLP (129) compares the total weighted cost of the schedule developed by the scheduler neural network model and the cost optimization calculation developed by the MINLP; and
maintaining the scheduler neural network model in a microgrid scheduler (118, 118') associated with a microgrid to generate a long term day ahead schedule for battery charge and discharge, controllable power generation and load dispatch for each microgrid of the plurality of microgrids when the total weighted costs of the scheduler neural network model is less than the cost optimization calculation.

7. The system of claim 6, wherein the system further includes;
a historian (103) coupled to the memory (268, 269) and to a source of historical data; and
a forecast uncertainty estimator (113) coupled to the neural network scheduler (112) that receives the day ahead forecast and state information and using the historical data from the historian (103) forecasts values for the actual observations input to the neural network scheduler.

8. The system of claim 7, wherein the system further includes:
grid peak detection software (102) executed by the processor (255) that receives the day ahead forecast from the external sources and couples the day ahead forecasts to the neural network scheduler (112), the forecast uncertainty estimator(113), and the historian (103); and
a trainer (124) for the microgrid scheduler (118, 118') wherein the trainer retrains the scheduler model when the total weighted costs of the scheduler neural network model is greater than the cost optimization calculation.

9. The system of claim 7, wherein the microgrid state information from each controller (150, 175) connected to a microgrid sends real-time data and instantaneous generation, demand, and state of charge (SOC) data (109) to the VPPP and to an optimization outcome analyzer (129) coupled to a remote terminal unit (RTU) controller (150) controlling a microgrid of the plurality of microgrids, wherein the outcome analyzer (128) develops a schedule for grid interactive power flow for the microgrid controlled by the RTU that is downloaded to and executed by the RTU controller (150).

10. The system of claim 7, wherein the controller controlling a microgrid of the plurality of microgrids is an intelligent edge controller comprising (175):
a processor (410) and a memory (415) each coupled to a hardware infrastructure (420) that includes network circuitry that communicatively connects the intelligent edge controller (175) to the VPPP communication interface (275), and which receives the scheduler model from the VPPP (100) for the microgrid controlled by the intelligent edge controller (175); and
a host operating system (425) executed by the processor (410) that executes the downloaded scheduler model to develop a schedule for grid interactive power flow for the microgrid.

11. The system of claim 8, wherein the intelligent edge controller (175) further includes a microgrid forecaster model (500) executed by the host operating system the forecaster model (500) generating a forecast for local demand and power generation for the intelligent edge controllers (175) associated microgrid based on instantaneous aggregate demand, generation and battery system state of charge (SOC) inputs supplied to the intelligent edge controller from the microgrid.

12. The system of claim 11, wherein the forecaster model includes:
A demand forecaster model (505) that when executed by the processor (255) generates a forecast for peak power flows with the microgrid; and
a renewable generation forecaster model (605) that when executed by the processor generates a forecast schedule for the generation of renewable energy within the microgrid to meet peak power flows.

13. The system of claim 12, wherein the schedule developed by the intelligent edge controller (175) scheduler model is uploaded to the VPPP as a real-time schedule for the microgrid controlled by the intelligent edge control to retrain the scheduler neural net model.

14. The system of claim 13, wherein the retrained scheduler model is downloaded to the intelligent edge controller (175) controlling the microgrid.

15. The system of claim 14, wherein the scheduler model (734) is downloaded developed when the total weighted costs of the MINLP solver (129) is greater than the total weighted cost of the scheduler neural network model.
